## Europäisches Patentamt

## European Patent Office

## Office européen des brevets

(19)

(11) Numéro de publication: **0 106 418**
**B1**

(12) # FASCICULE DE BREVET EUROPEEN

(45) Date de publication du fascicule du brevet:
**07.01.88**

(51) Int. Cl.⁴: **G 01 S 7/52**, G 01 S 15/89

(21) Numéro de dépôt: **83201493.0**

(22) Date de dépôt: **19.10.83**

(54) **Appareil d'exploration de milieux par échographie ultrasonore.**

(30) Priorité: **20.10.82 FR 8217550**
**28.09.83 FR 8315422**

(43) Date de publication de la demande:
**25.04.84 Bulletin 84/17**

(45) Mention de la délivrance du brevet:
**07.01.88 Bulletin 88/1**

(84) Etats contractants désignés:
**DE FR GB SE**

(56) Documents cités:
**EP - A - 0 077 585**
**FR - A - 2 147 469**
**FR - A - 2 292 984**
**GB - A - 2 021 767**
**GB - A - 2 072 847**
**US - A - 4 099 419**
**US - A - 4 356 731**

**THE JOURNAL OF THE ACOUSTICAL SOCIETY OF AMERICA, vol. 71, no. 1, janvier 1982, pages 100-109, Acoustical Society of America, New York, US;**

(73) Titulaire: **Laboratoires d'Electronique et de Physique Appliquée L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB SE**

(72) Inventeur: **Auphan, Michel, Société Civile S.P.I.D. 209 rue de l'Université, F-75007 Paris (FR)**

(74) Mandataire: **Landousy, Christian et al, Société Civile S.P.I.D. 209, Rue de l'Université, F-75007 Paris (FR)**

(56) Documents cités: (suite)
**M.HIRAMA et al.: "Adaptive ultrasonic array imaging system through an inhomogeneous layer" ULTRASONICS, vol. 19, no. 6, novembre 1981, pages 273-278, IPC Business Press, Guildford, Surrey, GB; W.KÖHL et al.: "A simple method of realizing the deconvolution of ultrasonic images"**

## Description

La présente invention concerne un appareil d'exploration de milieux et notamment de tissus biologiques par échographie ultrasonore, comportant une mosaïque de transducteurs ultrasonores associée à un étage d'émission prévu pour assurer une émission répétée de signaux ultrasonores, à un étage de réception prévu pour assurer la réception et le traitement des échos ultrasonores correspondant aux obstacles rencontrés dans leur direction de propagation par les signaux émis, et à un étage d'affichage des images ultrasonores reconstruites dans l'étage de réception.

Si la vitesse de propagation ultrasonore dans un milieu à examiner était rigoureusement constante et si les systèmes mécaniques et électroniques de reproduction géométriques étaient parfaits, les échos provenant des mêmes obstacles se superposeraient exactement sur l'image, quelle que soit la direction de l'axe d'exploration. Cette condition n'est en fait jamais réalisée dans la pratique, et les variations de vitesse ultrasonore à l'intérieur du milieu examiné conduisent à des distorsions de propagation, d'autant plus importantes que l'on travaille à plus grande ouverture, et qu'il faut donc corriger.

Selon le brevet des Etats-Unis d'Amérique US-A-4252025 déposé le 30 juillet 1979 par D.E. Robinson et délivré le 24 février 1981, il est connu, dans l'étage de réception d'un échographe, d'analyser les différences de position apparentes des échos correspondant au même obstacle à l'aide d'un dispositif d'intercorrélation comparant deux signaux obtenus dans deux positions d'exploration différentes et déterminant la position réelle dans laquelle les deux signaux sont le plus en accord l'un avec l'autre. Malheureusement, aucune indication concrète n'est fournie sur la réalisation pratique d'un tel étage de réception.

Le but principal de l'invention est de proposer un appareil d'exploration de milieux par échographie ultrasonore dont l'étage de réception assure de façon simple mais originale la correction des défauts de propagation dûs à l'hétérogénéité de la vitesse des ondes ultrasonores.

L'invention concerne à cet effet un appareil tel que défini en introduction et caractérisé en ce que:

(a) les transducteurs de la mosaïque sont regroupés en $2^n$ sous-fenêtres, n étant un entier positif, constituées chacune d'un groupe de transducteurs élémentaires adjacents et prévues pour que soit effectuée dans chacune d'elles une échographie d'une région des milieux explorés sans correction des défauts de propagation dûs à l'hétérogénéité de la vitesse des ondes ultrasonores;

(b) l'étage de réception comprend successivement, à la suite d'un dispositif de focalisation synthétique et de balayage prévu en sortie de la mosaïque, $2^n$ voies en parallèle comprenant chacune un dispositif de retard ajustable et une mémoire de stockage de ce retard et suivies d'un additionneur et d'un estimateur, la sortie de cet estimateur étant reliée à l'étage d'affichage;

(c) l'étage de réception comprend également un dispositif de détermination des retards correctifs à envoyer sur chaque dispositif de retard, ce dispositif de détermination, prévu pour rendre maximales des fonctions d'intercorrélation entre signaux échographiques par modification desdits retards ajustables, comprenant lui-même à cet effet $2^n-1$ circuits d'intercorrélation qui opèrent à l'aide de n bissections successives de l'ouverture de la mosaïque et de façon à comparer dans une première étape de bissection, à l'aide du premier circuit d'intercorrélation, les deux groupes de transducteurs constitués respectivement des $2^{n-1}$ premières sous-fenêtres et des $2^{n-1}$ autres sous-fenêtres, puis à appliquer le même processus de bissection dans chacun des deux groupes ainsi constitués successivement, jusqu'à épuisement des circuits d'intercorrélation prévus.

Les particularités de cette invention apparaissent de façon plus précise dans la description qui suit et dans les dessins annexés, donnés à titre d'exemple et dans lesquels:

– la figure 1 est une vue schématique très simplifiée de l'appareil selon l'invention;

– la figure 2 montre de façon plus détaillée l'étage de réception de l'appareil de la figure 1;

– la figure 3 montre la structure des circuits d'intercorrélation utilisés dans l'étage de réception de la figure 2.

L'appareil selon l'invention comprend essentiellement, dans l'exemple de réalisation ici décrit, une mosaïque rectangulaire 10 de transducteurs ultrasonores élémentaires, un étage 20 d'émission périodique de signaux ultrasonores, un étage 30 de réception et de traitement des échos ultrasonores correspondant aux obstacles rencontrés dans leur direction de propagation par les signaux émis, et un étage 40 d'affichage des images ultrasonores reconstruites dans l'étage 30. Un exemple d'une telle mosaïque est par exemple décrit et représenté dans la demande de certificat d'addition français FR-A-2292984.

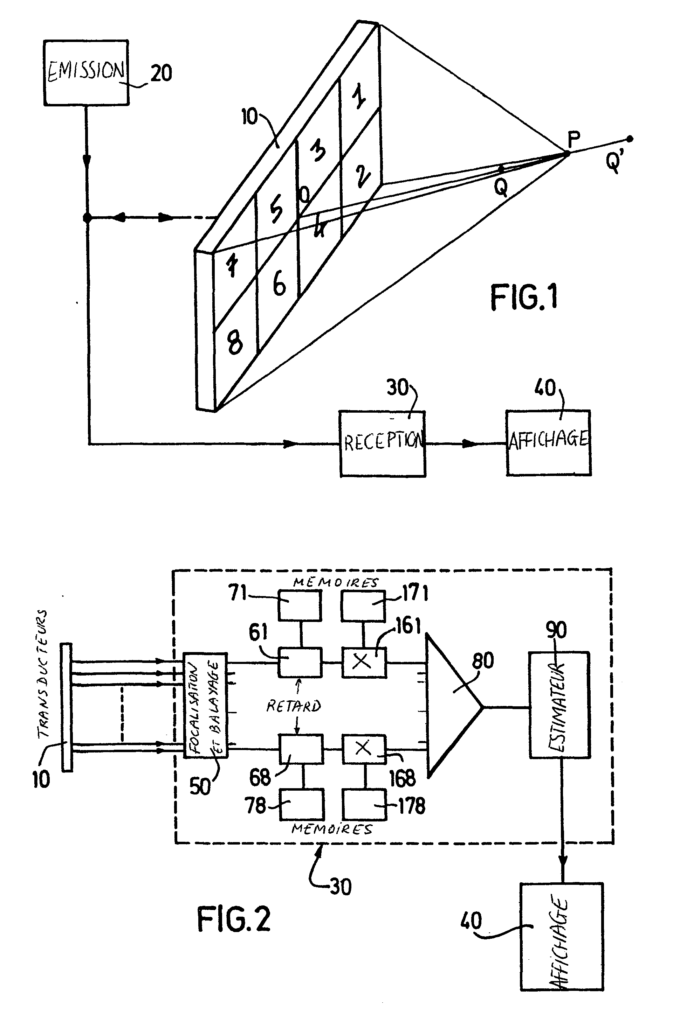

Le principe mis en œuvre dans cet appareil est le suivant. Etant donné la largeur de l'ouverture, très grande afin d'obtenir une résolution plus fine de l'image, on découpe cette ouverture en plusieurs sous-fenêtres constituées chacune d'un groupe de transducteurs élémentaires adjacents de la mosaïque, puis l'on effectue dans chaque sous-fenêtre une échographie sans corrections d'une région de l'organe examiné. Les corrections à appliquer ne sont déterminées qu'ultérieurement en cherchant à rendre maximales les fonctions d'intercorrélation entre signaux échographiques correspondant à un même segment de droite QQ' (voir la figure 1), obtenues à partir de deux parties de l'ouverture.

Plus précisément, et pour ne pas avoir à traiter toutes les fonctions d'intercorrélation, on met à profit la partition de l'ouverture en un certain nombre de sous-fenêtres en opérant cette partition par bissections successives. On cherche alors l'intercorrélation entre deux groupes de sous-fenêtres, puis l'on applique des corrections identiques et de signe opposé aux sous-fenêtres de chaque groupe, les différentes corrections ainsi déterminées (dans l'exemple décrit plus loin d'une part des retards ou des avances et d'autre part des amplitudes) se cumulant pour une même sous-fenêtre de manière que le processus en pyramide de correction par bissections fournisse une correction particulière à chaque sous-fenêtre (dans l'exemple décrit, trois étapes successives de bissection vont être effectuées, mais il ne s'agit là en aucune sorte d'une limitation de l'invention).

Dans le cas des retards ou avances, il va de soi que les corrections déterminées se superposent, dans l'appareil décrit plus en détail ci-dessous, aux retards individuels affectés à chaque transducteur élémentaire de la mosaïque 10 en raison du processus de focalisation. En effet, la plupart des appareils échographiques actuels explorent les différents points de l'image à reconstituer en focalisant sur ces points, en principe à l'émission et à la réception. Cette focalisation est obtenue en additionnant les signaux fournis par chaque élément de la mosaïque et retardés d'une quantité convenable, ces signaux étant distincts selon le point balayé et pondérés par un facteur lié aux atténuations des tissus explorés et à l'apodisation souhaitée.

Pour la simplicité de la mise en œuvre du principe décrit ci-dessus, on formulera en outre deux suppositions, à savoir d'une part que les corrections à apporter conformément à l'invention et qui dépendent du point sur lequel on focalise sont considérées comme très voisines lorsque ces points sont voisins, ce qui entraîne que ces corrections varient lentement au cours du balayage de l'image et peuvent donc être réajustées au fur et à mesure par un processus simple tel que des intercorrélations à deux voies visant à déterminer seulement dans quel sens les corrections doivent être modifiées, et d'autre part que ces corrections sont très voisines pour deux éléments adjacents de la mosaïque, ce qui permet de ne les appliquer que par groupes d'éléments contigüs, ou sous-fenêtres, qui pourront être en nombre limité, et d'éviter ainsi l'emploi d'un trop grand nombre de circuits de correction.

Le principe étant ainsi défini, on peut considérer la partie ultrasonore de l'appareil conforme à l'invention comme décrite de façon simplifiée par la figure 1, sur laquelle on a représenté la mosaïque 10 des transducteurs élémentaires couplée acoustiquement au milieu à explorer (à un moment déterminé de l'exploration, on focalise au point P situé sur le segment QQ′, tous les transducteurs de la mosaïque étant reliés électriquement à un ensemble de lignes à retard programmables et d'additionneurs) et de façon plus complète par la figure 2, expliquée de façon détaillée ci-dessous.

Pour réaliser dans le cas présent trois étapes successives de bissection, le sorties de la mosaïque 10 sont groupées en huit sous-fenêtres 1 à 8 (pour n étapes de bissection, on prévoierait $2^n$ sous-fenêtres), à chacune desquelles correspondent, après traversée d'un dispositif 50 de focalisation synthétique et de balayage, d'une part un dispositif de retard ajustable 61 à 68 et une mémoire 71 à 78 de stockage de ce retard, puis d'autre part, si l'on veut aussi corriger les défauts de propagation dûs à l'hétérogénéité de l'absorption des ondes ultrasonores, un multiplieur 161 à 168 et une mémoire 171 à 178 de stockage de coefficients correcteurs d'amplitude. Les signaux de sortie des circuits 161 à 168 sont envoyés vers un additionneur 80 dont la sortie est reliée à un estimateur 90, suivi lui-même de la mémoire d'image de l'étage d'affichage 40. L'estimateur 90 comprend par exemple un circuit redresseur suivi d'un filtre passe-bas pour obtenir l'enveloppe du signal. Il peut aussi être précédé ou suivi d'un circuit de déconvolution par une fonction d'appareil incluant l'un ou plusieurs de certains paramètres tels le signal d'excitation des transducteurs élémentaires, la réponse acousto-électrique d'un transducteur élémentaire en réception, la réponse électro-acoustique d'un transducteur élémentaire en émission, ou encore la réponse de diffraction de la sous-fenêtre considérée au point visé.

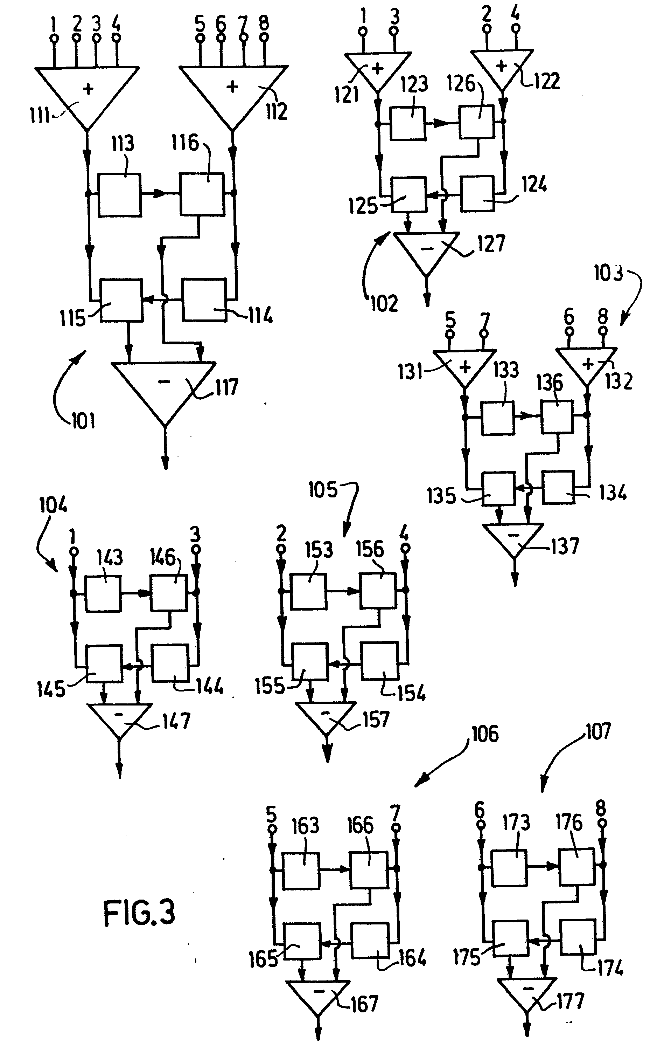

Les corrections temporelles sont déterminées, conformément à l'invention, à l'aide des sept circuits d'intercorrélation 101 à 107 représentés sur la figure 3. Le circuit 101 utilisé dans la première étape de bissection s'apparente (et de même pour les circuits 102 à 107) à un montage de filtrage adapté: il est formé de deux additionneurs 111 et 112 à quatre entrées recevant les signaux de sortie des sous-fenêtres 1 à 4 et 5 à 8 respectivement, de deux circuits à retard variable T 113 et 114 tels que le retard $+T$ soit appliqué par le circuit 113 et le retard $-T$ par le circuit 114, de deux corrélateurs 115 et 116, et d'un soustracteur-intégrateur 117. Ce montage permet de déterminer les retards $T_1$ à appliquer aux mémoires 71 à 74 et les retards $T_2$ à appliquer aux mémoires 75 à 78 par une simple variation de T. En effet, on montre que, dans le circuit 101, le signal de sortie du soustracteur-intégrateur 117 s'annule pour une certaine valeur $T_0$ de T et que les retards $T_1$ et $T_2$ sont alors déterminés par les expressions $T_1 = T_0/2$ et $T_2 = -T_0/2$. Il suffit donc de commander la variation de T jusqu'à ce que le signal de sortie du soustracteur-intégrateur 117 s'annule. Selon le signe du signal obtenu, c'est par une augmentation ou au contraire par une diminution de la valeur du retard T que l'on obtient cette annulation du signal de sortie du circuit 117.

Les corrélateurs mentionnés sont de type classique et sont décrits dans plusieurs ouvrages, par exemple dans «Méthodes et techniques de traitement du signal et applications aux mesures physiques», Volume 2, chapitre XVIII, «Principaux corrélateurs électroniques», de J. Max et al., publié chez Masson (France). Lorsqu'on utilise également les circuits décrits pour des corrections d'amplitude, la valeur $T_0$ ayant été déterminée comme indiqué, on détermine la valeur du signal de sortie pour une valeur $T_A$ de T telle que $T_A - T_0$ soit déterminé à l'avance, et soit identique pour tous les processus de bissection. Cette valeur du signal de sortie est alors normalisée puis stockée dans les mémoires 171 à 178. Un exemple de corrélateur de signaux échographiques est également décrit dans la demande de brevet anglais GB-A-2072847.

Les deux circuits 102 et 103 utilisés dans la deuxième étape de bissection comprennent de même chacun deux additionneurs 121, 122 et 131, 132 à deux entrées recevant les signaux de sortie des sous-fenêtres 1, 3 et 2, 4 pour les additionneurs 121, 122 et des sous-fenêtres 5, 7 et 6, 8 pour les additionneurs 131, 132, deux circuits à retard 123, 124 et 133, 134 respectivement, deux corrélateurs 125, 126 et 135, 136 respectivement, et un soustracteur-intégrateur, 127 et 137 respectivement, dont le signal de sortie agit de la même façon que précédemment. De la même manière, dans la troisième étape de bissection, les quatre circuits 104 à 107, dans lesquels des additionneurs ne sont pas nécessaires puisque ces circuits ne reçoivent sur chaque entrée que le signal de sortie d'une seule sous-fenêtre, comprennent chacun deux circuits à retard, (143, 144), (153, 154), (163, 164) et (173, 174) respectivement, deux corrélateurs (145, 146), (155, 156), (165, 166) et (175, 176) respectivement, et un soustracteur-intégrateur, 147 à 177 respectivement, dont le signal de sortie agit là encore comme précédemment. Les corrections ainsi déterminées peuvent être appliquées sur les transducteurs aussi bien à l'émission qu'à la réception.

Bien entendu, la présente invention n'est pas limitée à l'exemple de réalisation ci-dessus décrit et représenté, à partir duquel des variantes peuvent être proposées sans pour cela sortir du cadre de l'invention. On notera en particulier qu'il est préférable de prévoir un circuit de validation des circuits d'intercorrélation pour ne laisser parvenir, lors de la génération des retards correctifs et des coefficients correcteurs d'amplitude par le processus en pyramide par bissections successives, que les signaux correspondant au segment QQ' qui appartient au voisinage du point P. Par ailleurs, l'étage de réception de l'appareil selon l'invention peut opérer de deux façons distinctes: soit traiter les informations ultrasonores au fur et à mesure qu'elles sont fournies par la mosaïque, soit opérer en temps différé, par mise en mémoire des signaux émis et reçus par la mosaïque puis reconstitution des estimateurs de focalisation synthétique à partir de ces signaux dûment corrigés. On notera enfin qu'il est souvent avantageux de remplacer des circuits analogiques par des circuits numériques, ce qui est réalisable ici dans l'étage 30, ou même d'associer à ces circuits des moyens de traitement informatiques, avec mise en mémoire des informations provenant des huit sous-fenêtres.

## Revendications

1. Appareil d'exploration de milieux et notamment de tissus biologiques par échographie ultrasonore, comportant une mosaïque (10) de transducteurs ultrasonores associée à un étage d'émission (20) prévu pour assurer une émission répétée de signaux ultrasonores, à un étage de réception (30) prévu pour assurer la réception et le traitement des échos ultrasonores correspondant aux obstacles rencontrés dans leur direction de propagation par les signaux émis, et à un étage (40) d'affichage des images ultrasonores reconstruites dans l'étage de réception, caractérisé en ce que:

(a) les transducteurs de la mosaïque (10) sont regroupés en $2^n$ sous-fenêtres, n étant un entier positif, constituées chacune d'un groupe de transducteurs élémentaires adjacents et prévues pour que soit effectuée dans chacune d'elles une échographie d'une région des milieux explorés sans correction des défauts de propagation dûs à l'hétérogénéité de la vitesse des ondes ultrasonores;

(b) l'étage de réception (30) comprend successivement, à la suite d'un dispositif (50) de focalisation synthétique et de balayage prévu en sortie de la mosaïque (10), $2^n$ voies en parallèle comprenant chacune un dispositif de retard ajustable (61 à 68) et une mémoire (71 à 78) de stockage de ce retard et suivies d'un additionneur (80) et d'un estimateur (90), la sortie de cet estimateur étant reliée à l'étage d'affichage (40);

(c) l'étage de réception (30) comprend également un dispositif de détermination des retards correctifs à envoyer sur chaque dispositif de retard (61 à 68), ce dispositif de détermination, prévu pour rendre maximales des fonctions d'intercorrélation entre signaux échographiques par modification desdits retards ajustables, comprenant lui-même à cet effet $2^n-1$ circuits d'intercorrélation (101, 102,...,107) qui opèrent à l'aide de n bissections successives de l'ouverture de la mosaïque (10) et de façon à comparer dans une première étape de bissection, à l'aide du premier circuit d'intercorrélation, les deux groupes de transducteurs constitués respectivement des $2^{n-1}$ premières sous-fenêtres et des $2^{n-1}$ autres sous-fenêtres, puis à appliquer le même processus de bissection dans chacun des deux groupes ainsi constitués successivement, jusqu'à épuisement des circuits d'intercorrélation prévus.

2. Appareil selon la revendication 1, caractérisé en ce que les $2^n$ voies en parallèle de l'étage de réception (30) comprennent chacune un multiplieur (161 à 168) et une mémoire (171 à 178) de stockage de coefficients correcteurs d'amplitude et en ce que le dispositif de détermination de retards de cet étage est également un dispositif de détermination des coefficients correcteurs d'amplitude à appliquer sur chaque multiplieur (161 à 168).

3. Appareil selon l'une des revendications 1 et 2, caractérisé en ce que l'estimateur (90) comprend un circuit redresseur suivi d'un filtre passe-bas.

4. Appareil selon la revendication 3, caractérisé en ce que l'estimateur (90) comprend également, en série avec le circuit redresseur et le filtre, un circuit de déconvolution.

5. Appareil selon l'une des revendications 1 à 4, caractérisé en ce que les circuits d'intercorrélation comprennent chacun, à l'exception des $2^n-1$ circuits d'intercorrélation utilisés au cours de la dernière étape de bissection et pour lesquels des additionneurs ne sont pas nécessaires, deux additionneurs (111, 112), deux circuits à retard (113, 114), deux corrélateurs (115, 116), et un soustracteur-intégrateur (117), la sortie du premier additionneur étant reliée directement au premier corrélateur et par l'intermédiaire du premier circuit à retard au deuxième corrélateur, la sortie du deuxième additionneur étant reliée directement au deuxième corrélateur et par l'intermédiaire du deuxième circuit à retard au premier corrélateur, les sorties des premier et deuxième corrélateurs étant reliées aux entrées respectives du soustracteur-intégrateur, et les sorties du soustracteur-intégrateur étant envoyées vers les mémoires respectivement de stockage de retards et/ou de stockage de coefficients correcteurs d'amplitude.

## Claims

1. An apparatus for examining objects, notably biological tissues, by means of ultrasound echography, comprising a mosaic (10) of ultrasound transducers which is connected to a transmitter stage (20) for the repeated transmission of ultrasound signals, to a receiver stage (30) for the reception and processing of the ultrasound echoes which correspond to the obstacles encountered by the transmitted signals in their direction of propagation, and to a stage (40) for the display of the ultrasound images reconstructed in the receiver stage, characterized in that:

(a) the transducers of the mosaic (10) are grouped in $2^n$ subwindows, n being a positive integer number, each subwindow being formed by a group of adjacently situated elementary transducers and being suitable for forming an echogram of an area of the objects scanned which has not been corrected for propagation errors caused by the heterogeneity of the speed of the ultrasound waves;

(b) the receiver stage (30) successively comprises, subsequent to a focussing and scanning device (50) arranged at the output of the mosaic (10), $2^n$ parallel channels, each of which comprises an adjustable delay device (61...68) and a memory (71...78) for storing this delay, followed by an adder (80) and an evaluation circuit (90) whose output is connected to the display stage (40);

(c) the receiver stage (30) also comprises a device for determining correction delays to be applied to each delay device (61...68), said determination device serving to obtain maximum values of the intercorrelation functions between echographic signals by modification of said adjustable delays and itself comprising for this purpose $2^n-1$ intercorrelation circuits (101, 102, ..., 107) which operate on the basis of n successive divide-by-two operations of the aperture of the mosaic (10), that is to say so that during a first divide-by-two operation both groups of transducers formed by the $2^{n-1}$ first subwindows and the $2^{n-1}$ other subwindows are compared by means of the first correlation circuit, after which the same divide-by-two operation is performed on each of the two groups thus successively formed until each correlation circuit has had its turn.

2. An apparatus as claimed in Claim 1, characterized in that each of the $2^n$ parallel channels of the receiver stage (30) comprises a multiplier (161...168) and a memory (171...178) for the storage of amplitude correction factors, the device for determining the delays of this stage also being suitable for the determination of amplitude correction factors to be applied to each multiplier (161...168).

3. An apparatus as claimed in Claim 1 or 2, characterized in that the evaluation circuit (90) comprises a rectifier circuit which is followed by a low-pass filter.

4. An apparatus as claimed in Claim 3, characterized in that the evaluation circuit also comprises a deconvolution circuit which is connected in series with the rectifier circuit and the filter.

5. An apparatus as claimed in any one of the Claims 1 to 4, characterized in that each of the intercorrelation circuits, with the exception of the $2^{n-1}$ intercorrelation circuits used during the last divide-by-two operation and for which adders are not necessary, comprises two adders (112, 112), two delay circuits (113, 114), two correlation circuits (115, 116) and an integrating subtraction circuit (117), the output of the first adder being connected directly to the first correlation circuit and, via the first delay circuit, to the second correlation circuit, the output of the second adder being connected directly to the second correlation circuit, and, via the second delay circuit, to the first correlation circuit, the outputs of the first and the second correlation circuits being connected to the respective inputs of the integrating subtraction circuit, the output signals of the integrating subtraction circuit being applied to the memory for the storage of the delays ans/or the memory for the storage of the amplitude correction factors.

## Patentansprüche

1. Gerät zum Untersuchen von Medien und insbesondere von biologischen Geweben durch Ultraschallechographie, mit einem Mosaik (10) von Ultraschallwandlern, das einer Emissionsstufe (20) zum Gewährleisten einer wiederholten Ausstrahlung von Ultraschallsignalen, einer Empfangsstufe (30) zum Gewährleisten des Empfangs und der Verarbeitung der Ultraschallechos entsprechend in ihrer Fortpflanzungsrichtung von den ausgesandten Signalen begegneten Hindernissen und einer Anzeigestufe (40) für Ultraschallbilder zugeordnet ist, die in der Empfangsstufe rekonstruiert wurden, dadurch gekennzeichnet, dass

(a) die Wandler des Mosaiks (10) in $2^n$ Unterfenster umgruppiert sind, worin n eine positive Ganzzahl ist, und diese Unterfenster jeweils aus einer Gruppe elementarer benachbarter Wandler bestehen und dazu vorgesehen sind, dass in jedem Unterfenster eine Echographie eines Medienbereichs ohne Korrektur der durch die Heterogenität der Geschwindigkeit der Ultraschallwellen verursachten Fortpflanzungsfehler durchgeführt wird.

(b) die Empfangsstufe (30) aufeinanderfolgend hinter einer synthetischen Fokussierungs- und Bildabtasteinrichtung (50) am Ausgang des Mosaiks (10) $2^n$ parallele Wege mit je einer einstellbaren Verzögerungsanordnung (61 bis 68) und einem Speicher (71 bis 78) zum Speichern dieser Verzögerung enthält, wobei diesen Wegen eine Addierstufe (80) und eine Auswertungsstufe (90) folgen, und der Ausgang dieser Auswertungsstufe mit der Anzeigestufe (40) verbunden ist,

(c) die Empfangsstufe (30) ebenfalls eine Korrekturverzögerungsbestimmungsanordnung enthält, die für jede Verzögerungsanordnung (61 bis 68) die geeignete Verzögerung bestimmt wobei die Bestimmungsanordnung zum Optimieren der Korrelationsfunktionen zwischen echographischen Signalen durch des Ändern der einstellbaren Verzögerungen selbst $2^n-1$ Korrelationsschaltungen (101, 102 .... 107) enthält, die mit Hilfe von n aufeinanderfolgenden Zweiteilungen der Apertur des Mosaiks (10) arbeiten, derart dass in einem ersten Zweiteilungsschritt mit Hilfe der ersten Korrelationsschaltung die beiden Wandlergruppen verglichen werden, die aus den $2^{n-1}$ ersten Unterfenstern bzw. den $2^{n-1}$ anderen Unterfenstern bestehen, und darauf die selbe Zweiteilung an jeder der beiden auf diese Weise aufeinanderfolgend gebildeten Gruppen durchgeführt wird, bis die angeordneten Korrelationsschaltungen erschöpft sind.

2. Gerät nach Anspruch 1, dadurch gekennzeichnet, dass die $2^n$ parallelen Wege der Empfangsstufe (30) je eine Multiplizierstufe (161 bis 168) und einen Speicher (171 bis 178) zur Speicherung von Amplitudenkorrekturkoeffizienten enthalten, und dass die Verzögerungsbestimmungsanordnung dieser Empfangsstufe gleichzeitig eine Bestimmungsanordnung zur Bestimmung von jedem Vervielfacher (161 bis 168) zu zuführenden Amplitudenkorrekturkoeffizienten ist.

3. Gerät nach einem der Ansprüche 1 und 2, dadurch gekennzeichnet, dass die Auswertungsstufe (90) eine von einem Tiefpassfilter gefolgte Gleichrichterschaltung enthält.

4. Gerät nach Anspruch 3, dadurch gekennzeichnet, dass die Auswertungsstufe (90) in Reihe mit der Gleichrichterschaltung und dem Filter ebenfalls eine Entfaltungsschaltung enthält.

5. Gerät nach einem der Ansprüche 1 bis 4, dadurch gekennzeichnet, dass die Korrelationsschaltungen mit Ausnahme der $2^{n-1}$ Korrelationsschaltungen für den letzten Zweiteilungsschritt, wobei die Addierstufen nicht erforderlich sind, je zwei Addierstufen (111 und 112), zwei Verzögerungsschaltungen (113 und 114), zwei Korrelatoren (115 und 116) und eine Integratorsubtrahierstufe (117) enthalten, wobei der Ausgang der ersten Addierstufe mit dem ersten Korrelator direkt und über die erste Verzögerungsschaltung mit dem zweiten Korrelator verbunden ist, wobei der Ausgang der zweiten Addierstufe mit dem zweiten Korrelator direkt und über die zweite Verzögerungsschaltung mit dem ersten Korrelator verbunden ist, wobei die Ausgänge der ersten und zweiten Korrelatoren an die betreffenden Eingänge der Integrator-Subtrahierstufe angeschlossen sind, und dass die Ausgangssignale der Integrator-Subtrahierstufe an die betreffenden Speicher zur Speicherung von Verzögerungen und/oder zur Speicherung von Amplitudenkorrekturkoeffizienten gelegt werden.

FIG.1

EMISSION 20

10

1
3
2
0
5
4
7
6
8

P
Q
Q'

RECEPTION 30

AFFICHAGE 40

FIG.2

TRANSDUCTEURS

10

FOCALISATION ET BALAYAGE

50

MEMOIRES

71    171

61    161

RETARD

68    168

78    178

MEMOIRES

80

ESTIMATEUR 90

30

AFFICHAGE 40

FIG.3